# EUROPÄISCHE PATENTSCHRIFT

(11) **EP 3 038 927 B1**
(45) Veröffentlichungstag und Bekanntmachung des Hinweises auf die Patenterteilung: **07.06.2017**
(21) Anmeldenummer: 14752876.4
(22) Anmeldetag: 20.08.2014
(51) Int. Cl.: B65B 21/06, B65B 17/02, B65B 35/36, B65B 63/02

(54) **VERFAHREN UND VORRICHTUNG ZUR HERSTELLUNG VON GEBINDEN**
METHOD AND DEVICE FOR PRODUCING PACKAGES
PROCÉDÉ ET DISPOSITIF DE CONFECTION DE PACKS D'EMBALLAGES

(30) Priorität: 28.08.2013 DE 102013109305
(43) Veröffentlichungstag der Anmeldung: 06.07.2016
(73) Patentinhaber: KHS GmbH, 44143 Dortmund (DE)
(72) Erfinder: KAMPS, Sebastian, 47574 Goch (DE); NITSCH, Thomas, 47533 Kleve (DE); VAN HEUKELUM, Stefan, 47559 Kranenburg (DE)
(86) Internationale Anmeldenummer: PCT/EP2014/067709
(87) Internationale Veröffentlichungsnummer: WO 2015/028362

(56) Entgegenhaltungen:
- EP-A2- 2 258 625
- DE-A1-102009 025 824
- DE-B3-102012 005 925
- US-A- 4 078 357

## Beschreibung

Die Erfindung bezieht sich auf ein Verfahren gemäß Oberbegriff Patentanspruch 1 sowie auf eine Vorrichtung gemäß Oberbegriff Patentanspruch 7 zum Herstellen von Gebinden aus zu jeweils einer Behältergruppe zusammengestellten Behältern.

Ein Verfahren dieser Art ist bekannt (DE 10 2012 100 810 A1). Die Herstellung der Gebinde erfolgt mit der bekannten Vorrichtung derart, dass die zu dem jeweiligen Gebinde zusammenzustellenden Behälter auf zwei Behandlungsstrecken der Vorrichtung an ihrer Behälteraußenfläche oder Mantelfläche mit Kleberaufträgen eines selbstklebenden Klebers oder Kontaktklebers versehen werden. Die so behandelten Behälter werden dann von beiden Behandlungsstrecken an eine gemeinsame Förderstrecke weitergeleitet und bilden dort einen zweispurigen Behälterstrom. Aus diesem werden durch Abtrennen Behältergruppen gebildet, von denen jede in zwei in Transportrichtung der Transportstrecke orientierten Reihen die Anzahl an Behältern enthält, die für das jeweils herzustellende Gebinde erforderlich ist. Durch Zusammenführen der Behälter jeder Behältergruppe, d.h. durch Verdichten der Behältergruppen werden die mit den Kleberaufträgen versehenen Behälter an einander gerückt und dabei allein durch Verkleben zu dem jeweiligen Gebinde miteinander verbunden.

Aufgabe der Erfindung ist es, diese bekannte Vorrichtung hinsichtlich der Bildung der Behältergruppen und der Verdichtung der Behältergruppen in die Gebinde zu verbessern. Zur Lösung dieser Aufgabe ist ein Verfahren entsprechend dem Patentanspruch 1 ausgebildet. Eine Vorrichtung ist Gegenstand des Patentanspruchs 7.

Unter "Kontaktkleber" ist im Sinne der Erfindung ein Kleber zu verstehen, der selbstklebend und durch Anpressen eine Klebeverbindung herstellt und auch als Selbstkleber bezeichnet wird.

Weiterbildungen, Vorteile und Anwendungsmöglichkeiten der Erfindung ergeben sich auch aus der nachfolgenden Beschreibung von Ausführungsbeispielen und aus den Figuren. Dabei sind alle beschriebenen und/oder bildlich dargestellten Merkmale für sich oder in beliebiger Kombination grundsätzlich Gegenstand der Erfindung, unabhängig von ihrer Zusammenfassung in den Ansprüchen oder deren Rückbeziehung. Auch wird der Inhalt der Ansprüche zu einem Bestandteil der Beschreibung gemacht.

Der Ausdruck "im Wesentlichen" bzw. "etwa" bzw. "ca." bedeutet im Sinne der Erfindung Abweichungen vom jeweils exakten Wert um +/- 10%, bevorzugt um +/- 5% und/oder Abweichungen in Form von für die Funktion unbedeutenden Änderungen.

Die Erfindung wird im Folgenden anhand der Figuren an einem Ausführungsbeispiel näher erläutert. Es zeigen:

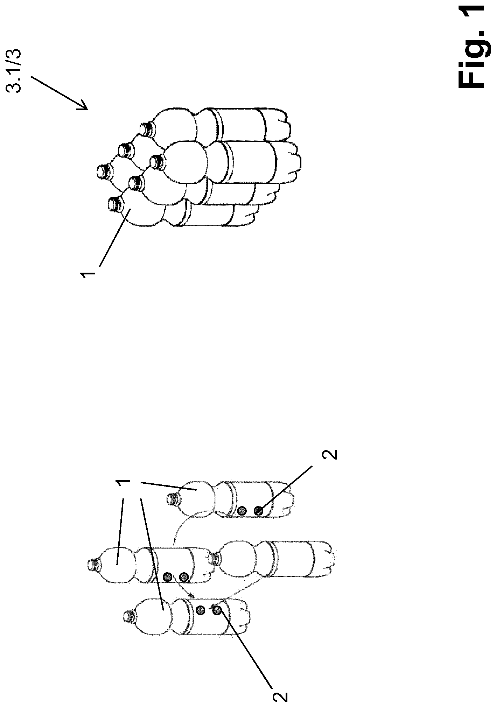

- Fig. 1: in schematischer perspektivischer Darstellung die Herstellung eines Gebindes aus mehreren Behältern in Form von Flaschen durch unmittelbares Verbinden der Behälter über Kleberaufträge eines Kontaktklebers;
- Fig. 2: in schematischer Darstellung und in Draufsicht eine Vorrichtung zur Herstellung der Gebinde;
- Fig. 3: in Draufsicht mehrere mit den Behältern entlang einer Transportstrecke mitbewegte Anpressköpfe der Vorrichtung der Fig. 2;
- Fig. 4 - 6: eine Gruppe von insgesamt drei Anpressköpfen in Draufsicht, in einer Seitenansicht senkrecht zu einer Transportrichtung der Behälter sowie senkrecht zu der Bewegungsrichtung der Anpressköpfe und in einer gegenüber der Fig. 5 um 90° gedrehten Seitenansicht.

In den Figuren sind 1 Behälter in Form von Flaschen, und dabei speziell in Form von Flaschen, die aus Kunststoff bzw. aus PET (Polyethylenterephthalat) durch Blasformen hergestellt sind. Die Behälter 1 sind mit einem flüssigen Füllgut gefüllt und verschlossen. Mehrere, d.h. bei der dargestellten Ausführungsform insgesamt sechs Behälter 1 bilden eine Behältergruppe 3.1, in der die Behälter 1 bei der dargestellten Ausführungsform in zwei Reihen mit jeweils drei Behältern 1 zusammengestellt und gegen einander anliegend über Kleberaufträge 2 eines Kontaktklebers unmittelbar, d.h. ohne eine Umverpackung zu dem jeweiligen Gebinde 3 verbunden sind. Die Kleberaufträge 2 sind auf die in der verdichteten Behältergruppe 3.1 sich berührenden Bereiche der Mantelflächen der Behälter 1 aufgebracht.

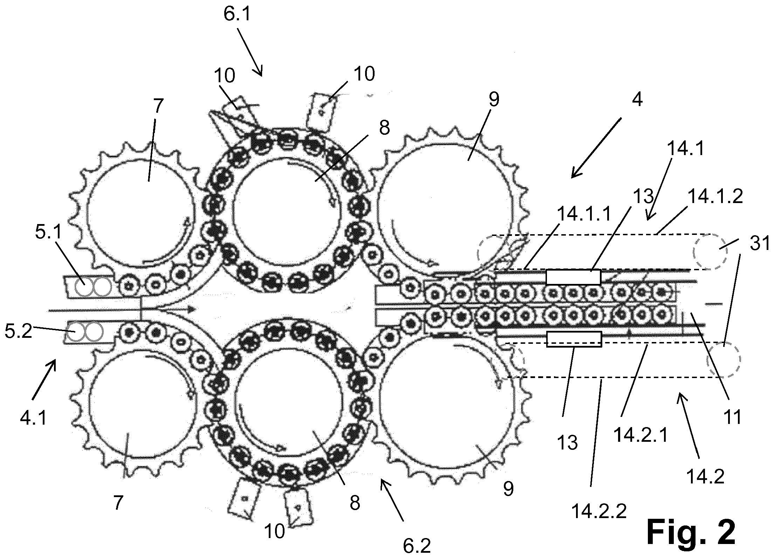

Zum Herstellen der Gebinde 3 aus den Behältern 1 dient die in der Fig. 2 allgemein mit 4 bezeichnete Vorrichtung, an deren Behältereinlauf 4.1 die Behälter 1 aufrecht stehend, d.h. mit ihren Behälterachsen vertikal orientiert als mehrspuriger Behälterstrom, d.h. bei der dargestellten Ausführungsform in zwei Spuren oder Behälterströmen 5.1 und 5.2 zugeführt werden, in welchen die Behälter1 in der Transportrichtung A vorzugsweise jeweils dicht aneinander anschließen. Die Behälter 1 des Behälterstroms 5.1 werden einer Behandlungsstrecke 6.1 und die Behälter 1 des Behälterstroms 5.2 werden einer Behandlungsstrecke 6.2 zugeführt. Auf den Behandlungsstrecken 6.1 und 6.2 erfolgt das lagerichtige Aufbringen der Kleberaufträge 2 auf die Behälter 1. Die Behandlungsstrecken 6.1 und 6.2 sind bei der dargestellten Ausführungsform identisch, aber spiegelsymmetrisch zu einer vertikalen Mittelebene ausgeführt und umfassen u.a. einen Einlaufstern 7, einen Behandlungsstern 8 und einen Auslaufstern 9, die jeweils um eine vertikale Achse umlaufend angetrieben sind und mit einer Vielzahl von Behälteraufnahmen am Sternumfang versehen sind. Am Behandlungsstern 8 sind die Behälteraufnahmen so ausgeführt, dass mit ihnen der jeweilige Behälter 1 um seine vertikale Behälterachse gesteuert dreh- oder schwenkbar ist, um die Kleberaufträge 2 lagerichtig auf die Mantelfläche der Behälter 1 aufzubringen. Letzteres erfolgt durch Auftragsköpfe 10, die an den Behandlungssternen 8 mit diesen nicht mitbewegt vorgesehen sind. Sind für das Verbinden der Behälter 1 zu dem jeweiligen Gebinde 3 auf den Behältern 1 mehrere Kleberaufträge 2 erforderlich, so sind beispielsweise in Drehrichtung des Behandlungssternes 8 aufeinanderfolgend mehrere Auftragsköpfe 10 vorgesehen. Über den jeweiligen Transportstern 9 werden die mit den Kleberaufträgen 2 versehenen Behälter 1 an eine Transportstrecke 11 weitergeleitet, auf der die Behälter 1 wiederum zweispurig in einer Transportrichtung B weiterbewegt werden, die bei der dargestellten Ausführungsform richtungsgleich mit der Transportrichtung A ist. Bei der dargestellten Ausführungsform bilden die Behälter 1 der Behandlungsstrecke 5.1 die eine Spur und die Behälter 1 der Behandlungsstrecke 5.1 die andere Spur auf der Transportstrecke 11. Auf dieser werden aus dem zweispurigen, sich in der Transportrichtung B bewegenden Behälterstrom zunächst jeweils die Behältergruppen 3.1 gebildet, die den herzustellenden Gebinden 3 entsprechen und bei der dargestellten Ausführungsform insgesamt jeweils sechs Behälter 1 aufweisen, und zwar in zwei sich in Transportrichtung B erstreckenden Reihen jeweils drei Behälter 1. Die Behältergruppen 3.1 sind in Transportrichtung B voneinander beabstandet. Jede Behältergruppe 3.1 wird auf der Transportstrecke 11 während ihres Transportes verdichtet, d.h. die Behälter 1 jeder Behältergruppe 3.1 werden quer zur Transportrichtung B und auch in Transportrichtung B sowie gegen die Transportrichtung B aneinander angepresst, so dass die Verbindung der Behälter 1 jeder Behältergruppe 3.1 über die Kleberaufträge 2 zu dem Gebinde 3 in der gewünschten Weise erfolgt.

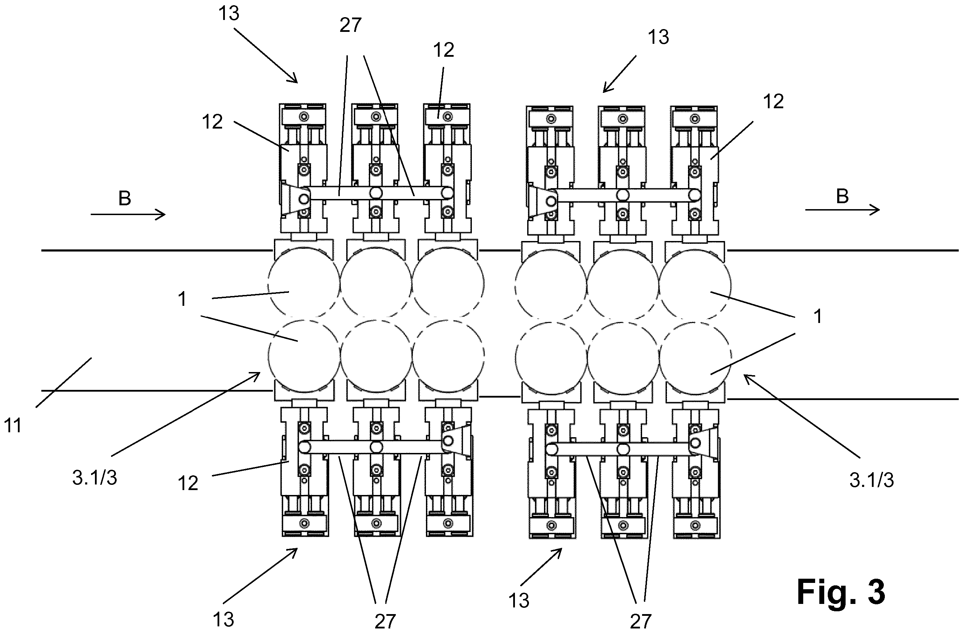

Zur Bildung der Behältergruppen 3.1, zum Verdichten der Behältergruppen 3.1 und zum Herstellen der Gebinde 3 ist eine Vielzahl von Anpressköpfen 12 vorgesehen, von denen der Anzahl der Behälter 1 in den Reihen der Gebinde 3 entsprechend jeweils drei Anpressköpfe 12 zu einer Anpresseinheit 13 zusammengefasst sind. Die Anpresseinheiten 13, die an beiden Seiten der Transportstrecke 11 vorgesehen sind, werden beim Betrieb der Vorrichtung 4 in der nachstehend noch näher beschriebenen Weise auf zwei in sich geschlossenen und seitlich von der Transportstrecke 11 verlaufenden Bewegungs- oder Umlaufbahnen 14.1 und 14.2 bewegt, und zwar u.a. auch auf den parallel zur Transportstrecke 11 bzw. zur Transportrichtung B verlaufenden und sich jeweils entlang einer Seite der Transportstrecke 11 erstreckenden Teillängen14.1.1 bzw. 14.12.1 der Umlaufbahnen 14.1 und 14.2, und zwar dort in Transportrichtung B und derart, dass jeweils einer Anpresseinheit 13, die sich auf der Teillänge 14.1.1 an einer Seite der Transportstrecke 11 bewegt, senkrecht zur Transportrichtung B eine Anpresseinheit 13 unmittelbar gegenüberliegt, die sich auf der Teillänge 14.2.1 an der anderen Seite der Transportstrecke 11 bewegt, wie dies in der Fig. 3 dargestellt ist. Die somit paarweise auf beiden Seiten der Transportstrecke 11 vorgesehenen Anpresseinheiten 13 bewegen sich synchron und mit derselben Geschwindigkeit.

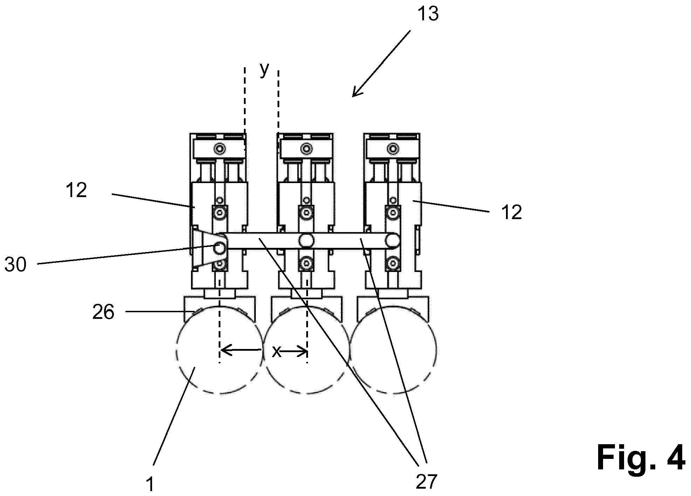

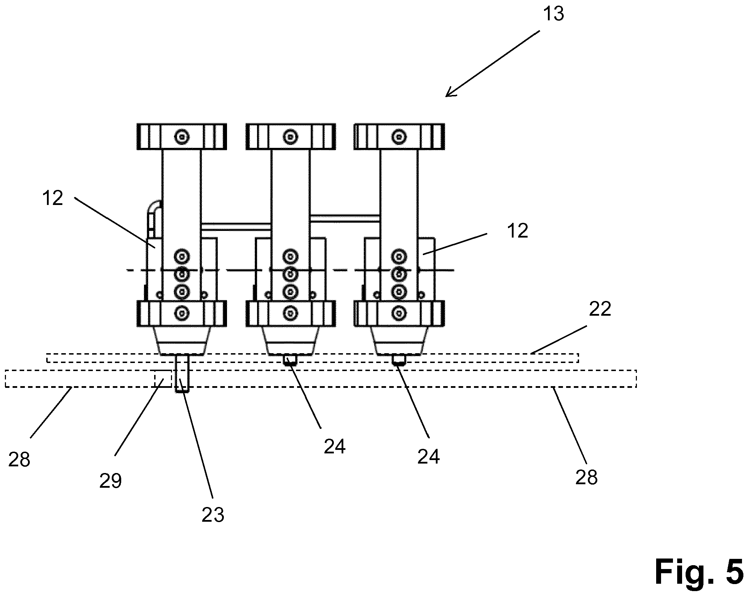

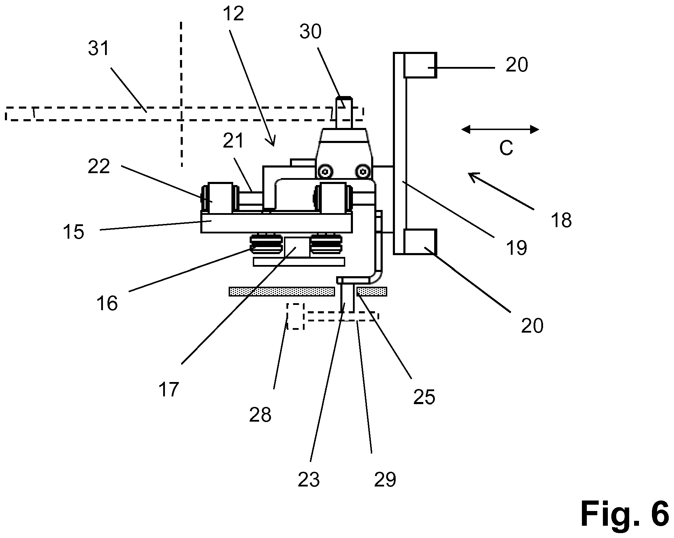

Wie die Fig. 4 - 6 zeigen, bestehen die Anpressköpfe 12 u.a. jeweils aus einem Träger oder Schlitten 15, der mit an der Schlittenunterseite vorgesehenen Führungsrollen 16 an einer Führungsschiene 17 geführt ist, deren Verlauf der jeweiligen geschlossenen Umlaufbahn 14. 1 bzw. 14.2 entspricht. An der Oberseite des Schlittens 15 ist u.a. ein Kopfstück 19 in einer horizontalen oder im Wesentlichen horizontalen Achsrichtung senkrecht zur Transportrichtung B gesteuert verschiebbar vorgesehen, und zwar für einen Zustell- und Anpressbewegung (Doppelpfeil C der Fig. 6). Das über die der Transportstrecke 11 zugewandte Seite des Anpresskopfes 12 bzw. des Schlittens 15 wegstehende Kopfstück 19 weist bei der dargestellten Ausführungsform zwei an den Durchmesser der Behälter 1 angepasste Behälteraufnahmen 20 auf, die in vertikaler Richtung voneinander beabstandet und die den jeweiligen Behälter 1 auf einem Teil seines Umfangs, d.h. bei der dargestellten Ausführungsform auf weniger als den halben Umfang aufnehmen, und zwar an einem oberen und unteren Bereich. Für die Zustell- und Anpressbewegung entsprechend dem Doppelpfeil C sind an der den Aufnahme 20 abgewandten Rückseite des leistenartigen Kopfstücks 19 zwei parallel zueinander und im Abstand voneinander angeordnete Führungsstangen 21 mit jeweils einem Ende befestigt, die in entsprechenden Führungen 22 am Schlitten 15 geführt sind. Das jeweilige Kopfstück 19 bildet zusammen mit seinen Behälteraufnahmen 20 und den Führungsstangen 21 ein Formatteil 18, welches bei der Umstellung der Vorrichtung 4 auf Behälter 1 mit einem anderen Behälterdurchmesser und/oder mit einer anderen Behälterform problemlos an sämtlichen Anpressköpfen 12 ausgetauscht werden kann.

Für die gesteuerte Zustell- bzw. Anpressbewegung (Doppelpfeil C) ist jedes Kopfstück 12 mit einem nach unten wegstehenden Führungszapfen 23 bzw. 24 versehen, der zumindest beim Bewegen der Anpressköpfe 12 bzw. der Anpresseinheiten 13 entlang der Teillängen 14.1.1 und 14.2.1 in eine dortige Führungskurve 25 eingreift. Der Verlauf jeder Führungskurve 25 ist so gewählt, dass sich die Kopfstücke 19 vor der Übergabe der Behälter 1 vom Transportstern 9 an die Transportstrecke 11 zunächst außerhalb dieser Transportstrecke bzw. der Bewegungsbahn der Behälter 1 befinden, dann noch währen der Übergabe oder nach der Übergabe und beim Weiterbewegen entlang der Teillänge 14.1.1 bzw. 14.2.1 bzw. der Transportstrecke 11 zunehmend auf die Behälter 1 zubewegt wird, so dass schließlich sämtliche die jeweilige Behältergruppe 3.1 bildenden Behälter 1 zwischen den beiden sich auf den beiden Seiten der Transportstrecke 11 gegenüberliegenden Anpresseinheiten 13 bzw. deren Anpressköpfen 12 bzw. den Kopfstücken 19 erfasst und gegeneinander angepresst werden.

Sind die Behälter 1 zumindest in Grenzen elastisch verformbar, wie dies bei Behältern 1 aus Kunststoff der Fall ist, so erfolgt beispielsweise beim Anpressen der Behälter 1 mit den an der Transportstrecke 11 einander gegenüberliegenden Anpressköpfen 13 ein leichtes Verformen der Behälter 1 in der Weise, dass dadurch auch ein gegenseitiges Anpressen der in der jeweiligen Behältergruppe 3.1 in Transportrichtung aneinander anschließenden Behälter erreicht und die Klebeverbindung zwischen den Behältern 1 auch in Transportrichtung B zuverlässig hergestellt wird. Grundsätzlich besteht auch die Möglichkeit, die Führungen 22 zumindest an den beiden außen liegenden Anpressköpfen 12 jeder Anpresseinheit 13 so anzuordnen, dass die Zustell- und Anpressbewegung (Doppelpfeil C) dieser Anpressköpfe auch eine Bewegungskomponente auch in Transportrichtung B bzw. entgegen der Transportrichtung B aufweist.

Am Ende der für das Verdichten der Behältergruppen 3.1 dienenden Teillänge der Transportstrecke 11 weist die Führungskurve 25 wiederum einen solchen Verlauf auf, dass sich der Abstand dieser Führungskurve von der Transportstrecke 11 vergrößert und dadurch die Behälter von den Kopfstücken 19 freigegeben werden.

Zur Bildung der Behältergruppen 3.1 werden die über die Transportsterne 9 zugeführten Behälter 1 also kontinuierlich und bevorzugt noch im Bereich beider Transportsterne 9 von jeweils einem Anpresskopf 12 bzw. dessen Kopfstück 19 aufgenommen und mit dem jeweiligen Anpresskopf 12 bzw. der jeweiligen Anpresseinheit 13 in Transportrichtung B mitgeführt. Die Transportgeschwindigkeit der Anpresseinheiten 13 ist dabei vorzugsweise geringfügig größer als die Transportgeschwindigkeit, mit der die Behälter 1 der Transportstrecke 11 zugeführt werden, wodurch sich dann die in Transportrichtung B voneinander beabstandeten Behältergruppen 3.1 ergeben. Zum Verdichten der Behältergruppen 3.1 sind also jeweils zwei Anpresseinheiten 13 an den beiden Seiten der Transportstrecke 11 einander gegenüberliegend angeordnet. Gleichzeitig sind die Anpressköpfe 12 dieser Anpresseinheiten 13 paarweise und einander in einer horizontalen Achsrichtung senkrecht zur Transportrichtung B gegenüber liegend angeordnet.

Um ein unerwünschtes Verdrehen der Behälter 1 beim Verdichten der jeweiligen Behältergruppe 3.1 zu vermeiden, sind die Behälteraufnahmen 20 an ihrer Behälteranlagefläche mit einem Reibungsbelag 26 versehen, der eine erhöhte Reibung zwischen dem jeweiligen Behälter 1 und der Behälteraufnahme 20 erzeugt.

Wie erwähnt, sind jeweils drei Anpressköpfe 12 zu einer Anpresseinheit 13 zusammengefasst, und zwar bei der dargestellten Ausführungsform mechanisch dadurch, dass die die jeweilige Anpresseinheit 13 bildenden Anpressköpfe 12 über zwei Verbindungstangen oder -laschen 27 an ihrer Oberseite gelenkig miteinander derart verbunden sind, dass der Achsabstand x der Anpressköpfe 12 bzw. deren Aufnahmen 20 dem Durchmesser eines Behälters 1 entspricht. Außerdem sind die einander benachbarten Anpressköpfe 12 bzw. deren Schlitten 15 voneinander beabstandet (Abstand y der Fig. 3), um so die Kurvengängigkeit der Anpresseinheiten 13 an den Umlenkbereichen der Umlaufbahnen 14.1 und 14.2 zu gewährleisten.

Die Bewegung der Anpresseinheiten 13 erfolgt zumindest auf den Teillängen 14.1.1 und 14.2.1 sowie auf Teillängen 14.1.2 und 14.2.2, auf denen die Anpresseinheiten 13 an Übergabebereiche zwischen dem jeweiligen Transportstern 9 und der Transportstrecke 11 zurückgeführt werden, mechanisch z.B. über eine umlaufend angetriebene Kette 28 (Schubkette), die in einem dem Abstand der Anpresseinheiten 13 entsprechenden Abstand Schubglieder 29 aufweist. Für den Weitertransport jeder Anpresseinheit 13 wird jeweils der längere, über die Führungskurve 25 nach unten wegstehende Führungszapfen 23, der bei der dargestellten Ausführungsform an dem bezogen auf die Transportrichtung B nachfolgenden Anpresskopf 12 jeder Anpresseinheit 13 vorgesehen ist, von dem Schubglied 29 erfasst.

An der Oberseite ist ein Anpresskopf 12 jeder Anpresseinheit 13, und zwar der bei der dargestellten Ausführungsform wieder der bezogen auf die Transportrichtung B nachfolgenden Anpresskopf 12 jeder Anpresseinheit 13, mit einem nach oben wegstehenden weiteren Führungszapfen 30 versehen, der an der jeweiligen Umlenkung der Umlaufbahn 14.1 bzw. 14.2 mit einer Verzahnung eines Zahnrades 31 in Eingriff kommt. Dieses ist um eine vertikale Achse umlaufend angetrieben, so dass an der jeweiligen Umlenkung die Anpresseinheiten 13 mittels des dortigen Zahnrades 31 weiterbewegt werden, während die Ketten 28 an der jeweiligen Umlenkung einen solchen Verlauf aufweisen, dass die Führungszapfen 23 dort jeweils außer Eingriff mit den Schubgliedern 29 sind. Hierdurch wird eine einwandfreie Bewegung der Anpresseinheiten 13 an den Umlenkbereichen der Umlaufbahn 14.1 bzw. 14.2 sowie insbesondere auch ein einwandfreier Einlauf der Anpresseinheiten in den Bereich der Transportstrecke 11 an den Transportsternen 9 und synchron mit der Bewegung dieser Transportsterne erreicht.

Es sind auch andere Maßnahmen möglich, um ein Verdichten der jeweiligen Behältergruppe 3.1 auch in Transportrichtung B zu erreichen. Beispielsweise können hierfür anstelle der Verbindungsstangen 27 Hydraulik- oder Pneumatikzylinder vorgesehen sein. Weiterhin ist auch eine Kinematik möglich, die bei der Zustell- und Anpressbewegung (Doppelpfeil C) der Kopfstücke 19 zugleich eine Reduzierung des Abstandes y zwischen den Anpressköpfen 12 der betreffenden Anpresseinheit 13 bewirkt. Das Anpressen der Behälter 1 in der Transportrichtung B bzw. entgegen dieser Transportrichtung beim Verdichten der jeweiligen Behältergruppe 3.1 kann ferner dadurch erreicht werden, dass der Achsabstand x, den die Behälteraufnahmen 20 voneinander aufweisen, etwas kleiner ist als der Durchmesser der Behälter 1.

Nicht dargestellt, aber alternativ vorteilhaft, ist die unmittelbare Übernahme der Behälter aus dem Behandlungsstern 8 durch die Umlaufbahn 14 bzw. den dort angeordneten Anpresseinheiten 13, in Kombination mit den sonstigen vorgenannten Elementen und Funktionen, wobei der Transportstern 9 vollständig entfällt. Hierzu, wie auch für die vorherigen Ausführungsformen, ist es sinnvoll, ein geeignetes Kurven- oder Gegengeländer bis zur Querannäherung zum gegenüberliegenden Behälterstrom vorzusehen, insb. ein Kurven- oder Gegengeländer das ein Abrollen der Behälter vermeidet, indem es zum Beispiel eine Vielzahl von Rollen aufweist oder als endlos umlaufendes Band ausgeformt ist.

Vorstehend wurde davon ausgegangen, dass für die Bewegung der Anpresseinheiten 13 ein mechanischer Antrieb vorgesehen ist, und zwar in Form der beiden Ketten 28 sowie der Zahnräder 31. Bei einer weiteren Ausführungsform der Erfindung sind die Anpressköpfe 12 oder aber zumindest jeweils ein Anpresskopf 12 jeder Anpresseinheit 13 Bestandteil oder ein umlaufendes Element (Läufer) eines elektrischen Linearmotors. Hiermit ist dann insbesondere auch eine individuelle Steuerung der einzelnen Anpresseinheiten 13 möglich, speziell auch möglich, die benötigte Anzahl an Anpresseinheiten 13 zu reduzieren, und zwar dadurch, dass auf der die Anpresseinheiten 13 zurückführenden Teillängen 14.1.2 und 14.2.2 die dort zu jedem Zeitpunkt vorhandene Anzahl an Anpresseinheiten 13 reduziert werden kann.

Bei Ausbildung sämtlicher Anpressköpfe 12 als Bestandteil eines elektrischen Linearantriebs ist es dann weiterhin auch nicht erforderlich, Anpressköpfe 12 mechanisch zu einer Anpresseinheit 13 zu verbinden, vielmehr erfolgt durch entsprechende Ansteuerung eine "virtuelle" Verbindung von mehreren Anpressköpfen 12 zu der jeweiligen Anpresseinheit 13, der die Anpressköpfe 12 beispielsweise nur bis zum Verdichten der Behältergruppen 3.1 bzw. bis zur Herstellung der Gebinde 3 zugeordnet sind, während beim nächsten Durchlauf die die Anpressköpfe 12 in völlig anderer Weise zu Anpresseinheiten 13 zusammengeführt werden. Hierdurch ergeben sich eine weitere Flexibilität hinsichtlich des Einsatzes der Anpressköpfe 12 und dadurch eine Reduzierung der in der Vorrichtung 4 benötigten Anzahl dieser Köpfe.

Bei Ausbildung der Anpressköpfe 12 als Teil (Läufer) eines Linearantriebes sind die Anpressköpfe bevorzugt jeweils mit einer Antriebswicklung ausgebildet, während entlang der Umlaufstrecke 14.1 und 14.2 in ihrer Polarität abwechselnde Magnetpole beispielsweise durch Permanentmagneten oder durch entsprechende Magnetwicklungen gebildet sind.

Bei Ausbildung der Anpressköpfe 12 als Teil eines Linearantriebes kann das Verdichten der jeweiligen Behältergruppe 3.1 in Transportrichtung B und entgegen dieser Transportrichtung auch durch entsprechende Steuerung der Bewegung der Anpressköpfe 12 in Transportrichtung B und/oder entgegen dieser Transportrichtung erreicht werden.

Allen Ausführungen ist gemeinsam,
dass die an den Anpressköpfen 12 vorgesehenen Kopfstücke 19 schnell und problemlos für einen Formatwechsel ausgetauscht werden können,
dass mit den Anpressköpfen 12 zum Verdichten der Behältergruppen 3.1 und Verbinden der Behälter 1 miteinander radial auf die Behälter 1 gerichtete Kräfte ausgeübt werden, so dass einander gegenüberliegende Behälter 1 gegeneinander angepresst werden,
dass die Anpressköpfe 12 durch geeignete Mittel eine auf die Behälter 1 gerichtete Kraft in der Art ausüben, dass benachbarte Behälter, die zwischen zwei einander gegenüberliegenden Anpresseinheiten 13 aufgenommen werden, gegeneinander angepresst werden.

### Bezugszeichenliste

- 1: Behälter
- 2: Kleberauftrag
- 3.1: Behältergruppe
- 3: Gebinde
- 4: Vorrichtung
- 4.1: Behältereinlauf
- 5.1, 5.2: Behälterstrom
- 6.1, 6.2: Behandlungsstrecke
- 7: Transportstern
- 8: Behandlungsstern
- 9: Transportstern
- 10: Auftragskopf
- 11: Transportstrecke
- 12: Anpresskopf
- 13: Anpresseinheit
- 14.1, 14.2: Umlaufbahn
- 14.1.1, 14.1.2: Teillänge
- 14.2.1, 14.2.2: Teillänge
- 15: Schlitten
- 16: Führungsrolle
- 17: Führungsschiene
- 18: Formatteil
- 19: Kopfstück
- 20: Behälteraufnahme
- 21: Führungsstange
- 22: Führung
- 23, 24: Führungsstift
- 25: Führung
- 26: Reibbelag
- 27: Verbindungsstange
- 28: Kette
- 29: Schubglied
- 30: Führungszapfen
- 31: Zahnrad
- A, B: Transportrichtung
- C: Zustell- und Presshub des Kopfstückes 19
- x, y: Abstand

## Patentansprüche

1. Verfahren zum Herstellen von Gebinden (3) aus Behältergruppen (3.1), die jeweils in wenigstens zwei Reihen zumindest einen Behälter (1) aufweisen, wobei die Behälter (1) einem Behältereinlauf (4.1) einer Vorrichtung (4) in wenigstens einem zweispurigen Behälterstrom (5.1, 5.2) zugeführt werden, auf wenigstens einer Behandlungsstrecke (6.1, 6.2) der Vorrichtung (4) mit Kleberaufträgen (2) eines Klebers, vorzugsweise eines Kontaktklebers versehen werden, und aus den so behandelten Behältern (1) auf einer Transportstrecke (11) ein wenigstens zweispuriger Behälterstrom gebildet wird, aus dem die Behältergruppen (3.1) abgetrennt und zum Verbinden der Behälter (1) jeder Behältergruppe (3.1) an den Kleberaufträgen (2) zu einem Gebinde (3) verdichtet werden,
**dadurch gekennzeichnet,**
**dass** das Abtrennen der Behältergruppen (3.1) mit in einer Transportrichtung (B) der Transportstrecke (11) bewegten Anpressköpfen (12) erfolgt, die die Behälter (1) an ihrer Mantelfläche erfassen, die Behälter (1) zum Verdichten der Behältergruppen (3.1) gegeneinander andrücken und jeweils paarweise an in der Transportrichtung (B) sich erstreckenden Seiten der Transportstrecke (11) einander gegenüberliegend vorgesehen sind.

2. Verfahren nach Anspruch 1, **dadurch gekennzeichnet, dass** jeder Behälterstrom (5.1, 5.2) am Behältereinlauf (4.1) einer eigenen Behandlungsstrecke (5.1, 5.2) zugeführt wird.

3. Verfahren nach Anspruch 1 oder 2 , **dadurch gekennzeichnet, dass** zur Herstellung von Gebinden (3) mit mehreren in wenigstens zwei Reihen angeordneten und über die Kleberaufträge (2) miteinander verbundenen Behältern (1) zum Abtrennen und Verdichten der Behältergruppen (3.1) Anpresseinheiten (13) verwendet werden, die an beiden sich in der Transportrichtung (B) erstreckenden Seiten der Transportstrecke (11) einander gegenüber liegend vorgesehen sind und jeweils mehrere Anpressköpfe (12), beispielsweise zwei oder drei Anpressköpfe (12) aufweisen.

4. Verfahren nach einem der vorhergehenden Ansprüche, dass die Anpressköpfe (12) beim Verdichten der Behältergruppen (3.1) radial auf die Behälter (1) einwirken, und zwar bezogen auf die jeweilige Behälterachse.

5. Verfahren nach einem der vorhergehenden Ansprüche, **dadurch gekennzeichnet, dass** die Anpressköpfe (12) an jeder Seite der Transportstrecke (11) auf einer geschlossenen Bewegungs- oder Umlaufbahn (14.1, 14.2) bewegt werden, von der sich eine Teillänge (14.1.1, 14.2.1) entlang der Transportstrecke (11) erstreckt, wobei die Umlaufbahn (14.1, 14.2) vorzugsweise von einer Führung oder Führungsschiene (17) für die Anpressköpfe (12) gebildet ist.

6. Verfahren nach einem der vorhergehenden Ansprüche, **dadurch gekennzeichnet**, die Anpressköpfe (12) und/oder die Anpresseinheiten (13) durch einen mechanischen Antrieb (28, 31) oder eine elektrischen Antrieb, vorzugsweise durch einen Linearantrieb und/oder individuell gesteuert bewegt werden.

7. Vorrichtung zum Herstellen von Gebinden (3) aus Behältergruppen (3.1), die jeweils in wenigstens zwei Reihen zumindest einen Behälter (1) aufweisen, mit einem Behältereinlauf (4.1), dem die Behälter (1) in wenigstens einem zweispurigen Behälterstrom (5.1, 5.2) zugeführt werden, mit jeweils einer Behandlungsstrecke (6.1, 6.2) für jeden Behälterstrom (5.1, 5.2), auf der die Behälter (1) mit Kleberaufträgen (2) eines Klebers, vorzugsweise eines Kontaktklebers versehen werden, mit einer Transportstrecke (11), die auf die wenigstens zwei Behandlungsstrecken (6.1, 6.2) in Transportrichtung der Behälter zur Ausbildung eines wenigstens zweispurigen Behälterstroms folgt, sowie mit Mitteln an der Transportstrecke (11) zum Abtrennen der Behältergruppen (3.1) aus dem Behälterstrom und zum Verdichten der Behältergruppen (3.1) unter Verbindung der Behälter (1) jeder Behältergruppe (3.1) an den Kleberaufträgen (2) zu einem Gebinde (3),
**dadurch gekennzeichnet,**
**dass** die Mittel zum Abtrennen und Verdichten der Behältergruppen (3.1) von die Behälter (1) an ihrer Mantelfläche mit jeweils wenigstens einer Behälteraufnahme (20) erfassenden, in einer Transportrichtung (B) der Transportstrecke (11) bewegten und die Behälter (1) gegeneinander andrückenden Anpressköpfen (12) gebildet sind, die jeweils paarweise an sich in der Transportrichtung (B) erstreckenden Seiten der Transportstrecke (11) einander gegenüberliegend vorgesehen sind.

8. Vorrichtung nach Anspruch 1, **dadurch gekennzeichnet, dass** zur Herstellung von Gebinden (3) mit mehreren in wenigstens zwei Reihen angeordneten und über die Kleberaufträge (2) miteinander verbundenen Behältern (1) jeweils mehrere Anpressköpfe (12), beispielsweise zwei oder drei Anpressköpfe (12) jeweils eine sich entlang der Transportstrecke (11) bewegende Anpresseinheit (13) bilden, und dass die Anpresseinheiten (13) paarweise, an der Transportstrecke (11) einander gegenüberliegend vorgesehen sind.

9. Vorrichtung nach Anspruch 7 oder 8, **dadurch gekennzeichnet, dass** die Anpressköpfe (12) an jeder Seite der Transportstrecke (11) auf einer geschlossenen Bewegungs- oder Umlaufbahn (14.1, 14.2) bewegbar sind, von der sich eine Teillänge (14.1.1, 14.2.1) entlang der Transportstrecke (11) erstreckt, wobei die Umlaufbahn (14.1, 14.2) vorzugsweise von einer Führung oder Führungsschiene (17) für die Anpressköpfe (12) gebildet ist.

10. Vorrichtung nach einem der vorhergehenden Ansprüche, **gekennzeichnet durch** wenigstens einen mechanischen Antrieb (28, 31) zum Bewegen der Anpressköpfe (12) und/oder der Anpresseinheiten (13), wobei beispielsweise der mechanische Antrieb eine Kette (28) und/oder mit den Anpressköpfen (12) in Umlenkbereichen der Umlaufbahn (14.1, 14.2) zusammenwirkende Antriebs-oder Zahnräder (31) aufweist.

11. Vorrichtung nach einem der vorhergehenden Ansprüche, **gekennzeichnet durch** einen elektrischen Linearantrieb für die Anpressköpfe (12) und/oder Anpresseinheiten (13), wobei die Anpressköpfe (12) als bewegliche Elemente oder Läufer des elektrischen Linearantriebs ausgebildet sind.

12. Vorrichtung nach einem der vorhergehenden Ansprüche, **dadurch gekennzeichnet, dass** die Anpressköpfe (12) jeweils einen an einer Führung oder Führungsschiene (17) geführten Wagen oder Schlitten (15) sowie ein die wenigstens eine Behälteraufnahme (20) bildendes Kopfstück (19) aufweisen, welches gesteuert für eine Zustell- und Anpressbewegung (C) am Wagen oder Schlitten (15) beweglich, vorzugsweise verschiebbar geführt ist,
wobei das jeweilige Kopfstück (19) beispielsweise als Formatteil (18) austauschbar am Wagen oder Schlitten (15) vorgesehen ist.

13. Vorrichtung nach Anspruch 12, **dadurch gekennzeichnet, dass** die Zustell- und Anpressbewegung (C) des jeweiligen Kopfstücks (19) kurvengesteuert erfolgt, und dass hierfür am Kopfstück(19) wenigstens ein Führungsstück (23, 24) vorgesehen ist, welches in wenigstens eine ortsfeste Führung (25) eingreift.

14. Vorrichtung nach Anspruch 13, **dadurch gekennzeichnet, dass** bei Ausbildung der Anpresseinheiten (13) mit jeweils mehreren mechanisch miteinander verbundenen Anpressköpfen (12) ein Anpresskopf (12) jeder Anpresseinheit (13), vorzugsweise der bezogen auf die Bewegung der Anpresseinheit (13) nacheilende Anpresskopf (12) für ein Zusammenwirken mit dem mechanischen Antrieb, beispielsweise mit der diesen Antrieb bildenden Kette (28) ausgebildet ist.

## Claims

1. Method for producing packages (3) of container groups (3.1), which each have at least one container (1) in at least two rows, wherein the containers (1) are fed to a container inlet (4.1) of a device (4) in at least one two-lane container stream (5.1, 5.2), having at least one treatment section (6.1, 6.2) of the device (4) on which the containers are provided with applications of an adhesive (2), preferably a contact adhesive, and from the containers (1) treated in this way, on a transport section (11), an at least two-lane container stream is formed, from which the container groups (3.1) are separated out and are compressed for connecting the containers (1) of each container group (3.1) to the applications of adhesive (2) to form a package (3), **characterised in that**
the separation of the container groups (3.1) takes place with pressing heads (12) moved in a transport direction (B) of the transport section (11), which secure the containers (1) at their casing surface and press them against one another for the compacting of the container groups (3.1), and in each case are provided in pairs opposite one another on sides of the transport section (11) extending in transport direction (B).

2. Method according to claim 1, **characterised in that** each container flow (5.1, 5.2) is fed in at the container inlet (4.1) of an individual treatment section (5.1, 5.2).

3. Method according to claim 1 or 2, **characterised in that**, for forming packages (3) with a plurality of containers (1) arranged in at least two rows and connected to one another by the applications of adhesive (2), pressing units (13) are used for separating and compacting the container groups (3.1), which are provided located opposite one another on both sides of the transport section (11) extending in the transport direction (B) and in each case comprise a plurality of pressing heads (12), for example two or three pressing heads (12).

4. Method according to any one of the preceding claims, **characterised in that** the pressing heads (12) for compacting the container groups (3.1) take effect radially on the containers (1), and specifically related to the respective container axis.

5. Method according to any one of the preceding claims, **characterised in that** the pressing heads (12) are moved on each side of the transport section (11) on a closed movement or circulating path (14.1, 14.2), of which a part length (14.1.1, 14.2.1) extends along the transport section (11), wherein the circulating path (14.1, 14.2) is preferably from a guide element or guide rail (17) for the pressing heads (12).

6. Method according to any one of the preceding claims, **characterised in that** the pressing heads (12) and/or the pressing units (13) are moved by a mechanical drive (28, 31) or an electrical drive, preferably by a linear drive and/or individually controlled.

7. Device for producing packages (3) from container groups (3.1), which in each case comprise in at least two rows at least one container (1), with a container inlet (4.1) to which the containers (1) are fed in at least one two-lane container flow (5.1, 5.2), with in each case a treatment section (6.1, 6.2) for each container flow (5.1, 5.2), on which the containers (1) are provided with applications (2) of an adhesive, preferably a contact adhesive, with a transport section (11) which follows the at least two treatment sections (6.1, 6.2) in the transport direction of the containers to form an at least two-lane container flow, as well as with means on the transport section (11) for separating the container groups (3.1) from the container flow and for compressing the container groups (3.1), with the connection of the containers (1) of each container group (3.1) at the applications of adhesive (2) to form a package (3),
**characterised in that**
the means for separating and compressing the container groups (3.1) are formed from pressing heads (12), securing the containers (1) on their casing surfaces with in each case at least one container receiver (20), moved in a transport direction (B) of the transport section (11), and pressing the containers (1) against one another, which are provided in each case in pairs opposite one another on sides of the transport section (11) extending in the transport direction (B).

8. Device according to claim 1, **characterised in that**, for forming packages (3) with a plurality of containers (1) arranged in at least two rows and connected to one another by applications of adhesive (2), in each case a plurality of pressing heads (12), for example two or three pressing heads (12) form in each case a pressing unit (13) moved along the transport section (11), and that the pressing units (13) are provided in pairs, opposite one another on the transport section (11).

9. Device according to claim 7 or 8, **characterised in that** the pressing heads (12) can be moved on each side of the transport section (11) on a closed movement or circulating path (14.1, 14.2), of which a part length (14.1.1, 14.2.1) extends along the transport section (11), wherein the circulating path (14.1, 14.2) is preferably from a guide element or guide rail (17) for the pressing heads (12).

10. Device according to any one of the preceding claims, **characterised by** at least one mechanical drive (28, 31) for moving the pressing heads (12) and/or pressing units (13), wherein, for example, the mechanical drive comprises a chain (28) and/or drive wheels or toothed wheels (31) interacting with the pressing heads (12) in deflection regions of the circulating path (14.1, 14.2).

11. Device according to any one of the preceding claims, **characterised by** an electric linear drive for the pressing heads (12) and/or pressing units (13), wherein the pressing heads (12) are formed as moving elements or runners of the electrical linear drive.

12. Device according to any one of the preceding claims, **characterised in that** the pressing heads (12) comprise in each case a trolley or carriage (15) guided on a guide element or guide rail (17), as well as a head piece (19) forming at least one container receiver (20), which is guided movably, preferably by pushing, in a controlled manner to incur a placement movement and pressing movement (C) at the trolley or carriage (15), wherein the respective head piece (19) is provided, for example as a format part (18), such that it can be replaced at the trolley or carriage (15).

13. Device according to claim 12, **characterised in that** the placement movement and pressing movement (C) of the respective head part (19) takes place under curve control, and that for this purpose at least one guide piece (23, 24) is provided at the head piece (19), which engages in at least one fixed-position guide element (25).

14. Device according to claim 13, **characterised in that**, at the formation of the pressing units (13), with in each case a plurality of mechanically connected pressing heads (12), a pressing head (12) of each pressing unit (13), preferably of the pressing head (12) downstream in relation to the movement of the pressing unit (13), is configured for an interaction with the mechanical drive, for example with the chain (28) forming this drive.

## Revendications

1. Procédé de fabrication d'emballages (3) de groupes de récipient (3.1) qui présentent respectivement dans au moins deux rangées au moins un récipient (1), dans lequel les récipients (1) sont fournis à une entrée de récipient (4.1) d'un dispositif (4) dans au moins un courant de récipient (5.1, 5.2) à deux voies, sont pourvus, sur au moins une voie de traitement (6.1, 6.2) du dispositif (4), d'applications de colle (2) d'une colle, de préférence d'une colle de contact, et un courant de récipient au moins à deux voies est formé à partir des récipients (1) ainsi traités sur une voie de transport (11), duquel les groupes de récipient (3.1) sont séparés et sont comprimés pour la liaison des récipients (1) de chaque groupe de récipient (3.1) sur les applications de colle (2) en un emballage (3),
**caractérisé en ce**
**que** la séparation des groupes de récipient (3.1) est effectuée avec des têtes de pressage (12) déplacées dans un sens de transport (B) de la voie de transport (11) qui détectent les récipients (1) sur leur surface enveloppe, pressent les récipients (1) les uns contre les autres pour compresser les groupes de récipient (3.1) et sont prévues respectivement par paires sur des côtés s'étendant dans le sens de transport (B) de la voie de transport (11) en regard les unes des autres.

2. Procédé selon la revendication 1, **caractérisé en ce que** chaque courant de récipient (5.1, 5.2) est fourni sur l'entrée de récipient (4.1) à une voie de traitement propre (5.1, 5.2).

3. Procédé selon la revendication 1 ou 2, **caractérisé en ce que** pour la fabrication d'emballages (3) avec plusieurs récipients (1) reliés entre eux par les applications de colle (2) et agencés dans au moins deux rangées, des unités de pressage (13) sont utilisées pour la séparation et la compression des groupes de récipient (3.1), lesquelles sont prévues sur les deux côtés s'étendant dans le sens de transport (B) de la voie de transport (11) en regard les unes des autres et présentent respectivement plusieurs têtes de pressage (12), par exemple deux ou trois têtes de pressage (12).

4. Procédé selon l'une des revendications précédentes, **caractérisé en ce que** les têtes de pressage (12) agissent radialement sur les récipients (1) lors de la compression des groupes de récipient (3.1), et ce par rapport à l'axe de récipient respectif.

5. Procédé selon l'une des revendications précédentes, **caractérisé en ce que** les têtes de pressage (12) sont déplacées sur chaque côté de la voie de transport (11) sur une bande de déplacement ou tournante (14.1, 14.2) fermée, de laquelle une longueur partielle (14.1.1, 14.2.1) s'étend le long de la voie de transport (11), dans lequel la bande tournante (14.1, 14.2) est formée de préférence par un guidage ou rail de guidage (17) pour les têtes de pressage (12).

6. Procédé selon l'une des revendications précédentes, **caractérisé en ce que** les têtes de pressage (12) et/ou les unités de pressage (13) sont déplacées par un entraînement mécanique (28, 31) ou un entraînement électrique, de préférence par un entraînement linéaire et/ou de manière commandée individuellement.

7. Dispositif de fabrication d'emballages (3) de groupes de récipients (3.1) qui présentent respectivement dans au moins deux rangées au moins un récipient (1), avec une entrée de récipient (4.1), à laquelle les récipients (1) sont fournis dans au moins un courant de récipient (5.1, 5.2) à deux voies, avec respectivement une voie de traitement (6.1, 6.2) pour chaque courant de récipient (5.1, 5.2), sur laquelle les récipients (1) sont pourvus d'applications de colle (2) d'une colle, de préférence d'une colle de contact, avec une voie de transport (11) qui suit les au moins deux voies de traitement (6.1, 6.2) dans le sens de transport des récipients pour la réalisation d'un courant de récipient au moins à deux voies, ainsi qu'avec des moyens sur la voie de transport (11) pour la séparation des groupes de récipient (3.1) du courant de récipient et pour la compression des groupes de récipient (3.1) en reliant des récipients (1) de chaque groupe de récipient (3.1) sur les applications de colle (2) en un emballage (3),
**caractérisé en ce**
**que** les moyens pour la séparation et la compression des groupes de récipient (3.1) sont formés par des têtes de pressage (12) pressant les récipients (1) les uns contre les autres et déplacés dans un sens de transport (B) de la voie de transport (11), détectant les récipients (1) sur leur surface enveloppe avec respectivement au moins un logement de récipient (20), qui sont prévues respectivement par paires sur des côtés s'étendant dans le sens de transport (B) de la voie de transport (11) en regard les unes des autres.

8. Dispositif selon la revendication 1, **caractérisé en ce que** pour la fabrication d'emballages (3) avec plusieurs récipients (1) reliés entre eux par les applications de colle (2), agencés dans au moins deux rangées, respectivement plusieurs têtes de pressage (12), par exemple deux ou trois têtes de pressage (12) forment respectivement une unité de pressage (13) se déplaçant le long de la voie de transport (11), et **en ce que** les unités de pressage (13) sont prévues par paires en regard les unes des autres sur la voie de transport (11).

9. Dispositif selon la revendication 7 ou 8, **caractérisé en ce que** les têtes de pressage (12) sont mobiles sur chaque côté de la voie de transport (11) sur une bande de déplacement ou tournante (14.1, 14.2) fermée, de laquelle une longueur partielle (14.1.1, 14.2.1) s'étend le long de la voie de transport (11), dans lequel la bande tournante (14.1, 14.2) est formée de préférence par un guidage ou rail de guidage (17) pour les têtes de pressage (12).

10. Dispositif selon l'une des revendications précédentes, **caractérisé par** au moins un entraînement mécanique (28, 31) pour le déplacement des têtes de pressage (12) et/ou des unités de pressage (13), dans lequel par exemple l'entraînement mécanique présente une chaîne (28) et/ou des roues d'entraînement ou dentées (31) coopérant avec les têtes de pressage (12) dans des zones de renvoi de la bande tournante (14.1, 14.2).

11. Dispositif selon l'une des revendications précédentes, **caractérisé par** un entraînement linéaire électrique pour les têtes de pressage (12) et/ou des unités de pressage (13), dans lequel les têtes de pressage (12) sont réalisées comme des éléments mobiles ou rotors de l'entraînement linéaire électrique.

12. Dispositif selon l'une des revendications précédentes, **caractérisé en ce que** les têtes de pressage (12) présentent respectivement un wagon ou chariot (15) guidé sur un guidage ou rail de guidage (17) ainsi qu'une pièce de tête (19) formant l'au moins un logement de récipient (20) qui est guidée par commande pour un mouvement d'avance et de pressage (C) sur le wagon ou chariot (15) de manière mobile, de préférence coulissante, dans lequel la pièce de tête respective (19) est prévue par exemple comme pièce de format (18) de manière interchangeable sur le wagon ou chariot (15).

13. Dispositif selon la revendication 12, **caractérisé en ce que** le mouvement d'avance et de pressage (C) de la pièce de tête respective (19) est effectué de manière commandée par came et **en ce que** pour cela, sur la pièce de tête (19), au moins une pièce de guidage (23, 24) est prévue, laquelle vient en prise avec au moins un guidage fixe (25).

14. Dispositif selon la revendication 13, **caractérisé en ce que** pour la réalisation des unités de pressage (13) avec respectivement plusieurs têtes de pressage (12) reliées entre elles mécaniquement, une tête de pressage (12) de chaque unité de pressage (13), de préférence la tête de pressage (12) en retard par rapport au mouvement de l'unité de pressage (13) est réalisée pour une coopération avec l'entraînement mécanique, par exemple avec la chaîne (28) formant cet entraînement.
